# EUROPEAN PATENT SPECIFICATION

(11) **EP 4 010 426 B1**
(45) Date of publication and mention of the grant of the patent: **09.08.2023**
(21) Application number: 20751131.2
(22) Date of filing: 04.08.2020
(51) Int. Cl.: C08L 75/08, C08G 18/40, C08G 18/48, C09D 5/02, C09D 7/62, C09D 7/43, C08G 18/42, C08G 18/32, C08G 18/22, C08G 18/50, C08G 18/73, C08K 5/21, C08G 18/66, C08G 18/76, C08G 18/79

(54) **ADDITIVE FOR TEMPERATURE ADAPTIVE RHEOLOGY PROFILE**
ADDITIV FÜR TEMPERATURADAPTIVES RHEOLOGIEPROFIL
ADDITIF POUR PROFIL RHÉOLOGIQUE S'ADAPTANT À LA TEMPÉRATURE

(30) Priority: 08.08.2019 EP 19190798
(43) Date of publication of application: 15.06.2022
(73) Proprietor: BYK-Chemie GmbH, 46483 Wesel (DE)
(72) Inventor: STEINMETZ, Alan, L., 46483 Wesel (DE); ADAMS, Justin, 46483 Wesel (DE); NAGELSDIEK, René, 46483 Wesel (DE); BENEFIEL, Donna, 46483 Wesel (DE); WALTER, Diana, 46483 Wesel (DE); OSBORNE, Aaron, 46483 Wesel (DE); ZODY, Georg, M., 46483 Wesel (DE)
(74) Representative: Altana IP Department
(86) International application number: PCT/EP2020/071878
(87) International publication number: WO 2021/023734

(56) References cited:
- US-A1- 2006 106 153
- US-A1- 2008 234 425
- US-A1- 2009 088 516

## Description

The invention relates to a polymer P comprising at least one segment S1 and at least one segment S2 covalently linked to each other, to a liquid composition comprising the polymer P, water, and a non-volatile film-forming component, and to the use of the polymer P for adjusting the temperature dependence of the viscosity of a composition.

Liquid formulations, such as coating compositions, usually exhibit a rheological behavior that is characterized by a viscosity drop with increasing temperature. For coating compositions, especially for waterborne coating compositions used for exterior coatings, it would be highly desirable to have a viscosity which is less dependent or even independent of the temperature within the temperature range of application and drying of the coating film, like temperature change during the day/night cycle.

Temperature influences viscosity to affect coating film properties during and after application. Usually, a cold paint suffers from too high of a viscosity. The paint flows out with difficulty and unsightly brush marks remain visible. Air bubbles may become entrapped. Warm paint often flows too easily. The paint may run and drip after application, sagging to create a sloppy look. The final film may be too thin and require multiple coats to achieve sufficient thickness. These viscosity changes may also impact paint stability during storage and transportation over hot and cold climates. Paint applicators would therefore like to have formulations that have similar performance properties across a broad temperature and shear rate range.

US 7,432,325 describes ethoxylated and alkoxylated co-polymers as nonionic associative thickeners. These polymers contain a terminal hydrophobe comprising from 1 to about 24 carbon atoms after a urethane or urea containing linking group. The alkylene oxide units are preferably propylene oxide. Examples contain polypropylene oxide segments having a molecular weight below 2000 g/mol. Some of the thickeners described in this document cause a viscosity increase with temperature at a low shear rate.

WO 94/16044 relates to foam regulators for detergents obtained by reacting propylene glycol and optionally polyethylene glycol with diisocyanates and/or dicarboxylic acids. Examples contain low molecular weight polyethylene glycol at low concentrations.

US 4,327,008 describes nonionic associative thickeners having a branched structure, urea linkages and terminal hydrophobic groups. These polymers are products of polyalkylene oxide, polyfunctional material, diisocyanate, water and mono-functional active hydrogen-containing compound or monoisocyanate to end-cap free isocyanate or hydroxyl groups. The temperature dependence of viscosity is not addressed in this document.

There is an ongoing need for polymers suitable as thickening agents and suitable for formulating liquid compositions having a low or reduced temperature dependence of the viscosity. This is of interest at a variety of shear rates to maintain a thixotropic behavior of a composition.

Therefore, the invention seeks to provide new polymers suitable as thickening agents which counter the viscosity decrease with increasing temperature which traditional formulations exhibit.

The invention provides a polymer P comprising at least one segment S1 and at least one segment S2 covalently linked to each other, wherein
i) at least one segment S1 has a number average molecular weight in the range of 6,000 - 25,000 g/mol and consists of ether repeating units, and for at least 75 % by weight of repeating units of the formula -[CH₂-CH₂-O-]-,
ii) at least one segment S2 has a number average molecular weight of at most 10,000 g/mol and consists of ether repeating units, and for at most 25 % by weight of repeating units of the formula -[CH₂-CH₂-O-]-,
iii) polymer P comprises terminal groups comprising at least one of hydroxyl, primary amine or salts thereof, secondary amine or salts thereof, carboxylic acid or salts thereof.

In a preferred embodiment, the number average molecular weight of at least one segment S1 is above 6,000 g/mol; more preferred above 7,000 g/mol; even more preferred above 8,000 g/mol.

It is furthermore preferred that the number average molecular weight of at least one segment S1 is below 25,000 g/mol; more preferred below 20,000 g/mol; even more preferred below 15,000 g/mol, most preferred below 10,000 g/mol.

In another embodiment, the number average molecular weight of all segments S1 is in the given ranges.

It is preferred that the units of segment S1 consist of at least 80% by weight of repeating units having the formula -[CH₂-CH₂-O-]-. It is very preferred that the repeating units of segment S1 consist of at least 85% by weight of units having the formula -[CH₂-CH₂-O-]-. It is even more preferred that the repeating units of segment S1 consist of at least 90, 95, or even 98 % by weight of units having the formula -[CH₂-CH₂-O-]-. In one embodiment, the segment S1 consists only of repeating units having the formula -[CH₂-CH₂-O-]-.

It is preferred that the repeating units of segment S2 consist of at most 20% by weight of units having the formula -[CH₂-CH₂-O-]-. It is very preferred that the repeating units of segment S2 consist of at most 15% by weight of units having the formula -[CH₂-CH₂-O-]-. It is even more preferred that the repeating units of segment S2 consist of at most 10, 5, or even 2% by weight of units having the formula -[CH₂-CH₂-O-]-. In one embodiment, the segment S2 does not contain units having the formula -[CH₂-CH₂-O-]-.

Suitably, the segment S2 comprises at least 75 % by weight of repeating units of the formula - [CH(CH₃)-CH₂-O]-.

Preferably the repeating units of segment S2 consist of at least 80% by weight of units having the formula -[CH(CH₃)-CH₂-O]-. It is very preferred that the units of segment S2 consist of at least 85% by weight of units having the formula -[CH(CH₃)-CH₂-O]-. It is even more preferred that the units of segment S2 consist of at least 90, 95, or even 98 % by weight of units having the formula -[CH(CH₃)-CH₂-O]-. In one embodiment, the segment S2 only contain repeating units having the formula -[CH(CH₃)-CH₂-O]-.

In a preferred embodiment, the number average molecular weight of at least one segment S2 is above 2,000 g/mol; more preferred above 3,000 g/mol; it is furthermore preferred that the number average molecular weight of at least one segment S2 is below 10,000 g/mol; more preferred below 8,000 g/mol; even more preferred below 6,000 g/mol.

The number average molecular weight of the segments S1 and S2 can suitably be determined by measurement of the hydroxyl group content of the hydroxyl terminated segments, for example by titration.

In typical embodiments, the covalent link between segments S1 and S2 comprises at least one of an amide group, urethane group, urea group, ether group, ester group, polysaccharide group, aminoplast ether group, acetal group, or ketal group. In preferred embodiments, the covalent link comprises at least one of a urethane group and a urea group. It is more preferred that the covalent link comprises two urethane groups.

The polymer P suitably comprises from 33 - 80 % by weight of segments S1, calculated on the total weight of the polymer. Preferably, the polymer P comprises from 33 - 72 % by weight, more preferably 50 - 62 % by weight, of segments S1, calculated on the total weight of the polymer.

The polymer P suitably comprises from 20 - 67 % by weight of segments S2, calculated on the total weight of the polymer. Preferably, the polymer P comprises from 28 - 67 % by weight, more preferably 38 - 50 % by weight, of segments S2, calculated on the total weight of the polymer.

In a preferred embodiment, the terminal groups of polymer P consist of groups selected from hydroxyl, primary amine or salts thereof, secondary amine or salts thereof, carboxylic acid or salts thereof. In preferred embodiments, the terminal groups do not contain alkyl ether groups.

Preferably, the terminal groups are selected from hydroxyl groups and amine groups or salts thereof. Most preferably all terminal groups are hydroxyl groups.

The polymer P suitably has a number average molecular weight in range of 8,000 - 50,000 g/mol. The number average molecular weight of the polymer P is generally determined by gel permeation chromatography (GPC), using polyethylene oxide as calibration standard and tetrahydrofuran as eluent.

As mentioned above, the polymer P comprises at least one segment S1 and at least one segment S2 covalently linked to each other. In some embodiments, the polymer contains only one segment S1 and one segment S2. In other embodiments, the polymer contains two or more segments S2. In a preferred embodiment of the polymer, one segment S1 is located between two segments S2.

The polymers P of the invention can be obtained by generally known chemical reactions. For example, polymers P can be obtained by reacting molecules comprising segments S1 and others comprising segments S2 directly with each other, e.g. an amine functional polymer comprising segment S1 and an isocyanate functional polymer comprising segment S2 to provide a urea group as covalent link. In another example, the covalent link can be established by providing an alkoxylation reaction to a prepolymer already containing segment S1 or S2. In a preferred embodiment, the covalent link between segments S1 and S2 is established by reacting prepolymers comprising segments S1 and others comprising segments S2 with a non-polymeric polyfunctional molecule to connect the segments to each other.

The polymer P of the invention is suitably prepared by a process which comprises the following steps
i) Providing a hydroxyl or primary amine terminated segment S1 having a number average molecular weight in the range of 6,000 - 25,000 g/mol and consisting of polyether units, and for at least 75 % by weight of units of the formula -[CH₂-CH₂-O-]-.
ii) Providing a hydroxyl or primary amine terminated segment S2 having a number average molecular weight of at most 10,000 g/mol and consisting of polyether units, and for at most 25 % by weight of units of the formula -[CH₂-CH₂-O-]-.
iii) A molecule having two or more hydroxyl or primary amine reactive groups.
iv) Reacting the segments S1, S2, and the molecule having two or more hydroxyl or primary amine reactive groups to form polymer P.

It is preferred that the polymers P wherein the linking groups are urethane and/or urea groups are obtained by reacting segments S1 and S2 having hydroxyl and/or amine functional groups with isocyanate molecules having a functionality of at least 2, i.e., polyisocyanates. Preferably, these polyisocyanates are selected from hexamethylene diisocyanate (HDI), 2,6- and 2,4-toluylene diisocyanate (TDI), xylylene diisocyanate (XDI), 2,2,4- and 2,4,4-trimethyl hexamethylene diisocyanate (TMDI), isophorone diisocyanate (IPDI), meta-tetramethyl xylylene diisocyanate (TMXDI), 2,2'- and 2,4'- and 4,4'-diphenylmethandiisocyanate (MDI), 2,2'- and 2,4'- and 4,4'-methylene bis(cyclohexylisocyanate) (hydrogenated MDI) and mixtures thereof. Very preferred polyisocyanates with two isocyanate groups include TMDI, TMXDI, and hydrogenated MDI. Very preferred polyisocyanates with three or more isocyanate groups include isocyanurate and biuret trimers such as HDI isocyanurate (trimer), and IPDI isocyanurate (trimer) and reaction products of polyfunctional alcohols (such as trimethylolpropane) with an excess of diisocyanates.

The synthetic reaction conditions to provide the inventive polymer P depend on the kind of covalent link that is established between segments S1 and S2.

In the very preferred embodiment in which S1 and S2 are connected via urethane bonds, the reaction of hydroxyl functional prepolymers S1 and S2 and polyisocyanates to build up polymer P is suitably carried out in a temperature range of 20 to 120 °C, although temperatures outside of this range are possible, if so desired. A preferred temperature range is from 50 to 100 °C, in particular 60 to 90 °C. If desired, the reaction can be carried out in the presence of a catalyst for catalyzing the reaction between isocyanate groups and hydroxyl groups. Such catalysts are well-known in the art. The process can be carried out in the absence or in the presence of a solvent. In some embodiments it is preferred to carry out the process in the absence of a solvent. The process can be carried out as a batch process, or a as a semi-batch process.

In one embodiment, the process is carried out in a continuous manner wherein the reactants are continuously fed in to a reaction zone and passed through the reaction zone, and wherein the polymer P is continuously removed from the reaction zone. The reactants may be fed into the reaction zone individually or as a pre-mix. A suitable apparatus for the continuous process includes an extruder or kneader, for example a twin-screw extruder, for example, a machine such as a CRP-63 or CRP-630 from LIST AG of Basel, Switzerland

The polymer P of the invention is very suitable as a rheology control agent in aqueous liquid compositions. Therefore, the invention further relates to liquid composition comprising
a) water,
b) a non-volatile film-forming component, and
c) a polymer P according to the invention.

The composition is generally liquid at a temperature of 20 °C. Generally, in the liquid composition the main or only liquid diluent used is water. Preferably, the composition contains less than 35 % by weight, 25 % by weight, 20 % by weight or even less than 10 % by weight of (volatile) organic solvents, based on the total weight of water and organic solvent in the liquid formulation. In some embodiments, the composition is free of volatile organic solvents. Generally, the water present in the composition forms a continuous liquid phase.

"Non-volatile" refers to components having a boiling point above 300 °C at atmospheric pressure, or which at atmospheric pressure decompose below their boiling point.

Film-forming components include organic and inorganic binders, polymers, resins, reactive diluents, plasticizers, polymerizable monomers, and crosslinking agents. In a preferred embodiment, the film-forming component is hydrophobic. "Hydrophobic" means having a contact angle greater than or equal to 90°. The contact angle can suitably be determined according to ASTM D7334-08. In certain embodiments, hydrophobic surfaces may exhibit contact angles > 120°, or > 140°. Hydrophobic liquid compositions are generally immiscible with water.

Examples of film-forming binders and polymers include acrylic resins, styrene-acrylic resins, polyester resins, polyurethane resins, polyether resins, epoxy resins, silicate binders, and polyvinyl acetate, as well as hybrids and combinations thereof.

When combined with conventional thickeners, for example conventional associative thickeners, the polymer of the invention can impart a desirable flat temperature response of the viscosity of aqueous compositions.

Therefore, in a preferred embodiment, the liquid composition further comprises a thickener d) which is different from component c).

Examples for the thickener d) are associative thickeners, such as hydrophobically modified ethoxylated urethanes as described in patents US 4,079,028 and US 4,155,892, hydrophobically modified aminoplast thickeners as describe in US 5,627,232 and US 5,914,373, acrylate thickeners, such as alkali swellable emulsions and hydrophobically modified alkali swellable emulsions, polysaccharides and their derivatives, such as guar gum, xanthan, cellulose ethers and esters, clay based thickeners, pyrogenic silica, urea based thickeners, such as urea urethanes as described in U.S. Pat. No. 4,327,008, or amide and polyamide based thickeners.

In a preferred embodiment of the liquid composition, component a) is present in an amount of at least 30.0 to 89.9 % by weight, component b) is present in an amount of 5.0 to 40.0 % by weight, component c) is present in an amount of 0.1 to 8.0 % by weight, and component d) is present in an amount of 0.0 to 4.0 % by weight, calculated on the sum of the weight of components a), b), c), and d).

Generally, the polymer P of the invention is present in the aqueous liquid compositions in an amount of at least 0.1 % by weight, for example 0.2 or 0.3 % by weight, or preferably at least 0.5 % by weight, calculated on the total weight of the liquid composition.

Generally, the polymer P of the invention is present in the aqueous liquid compositions in an amount of at most 9.0 % by weight, for example 7.0 or 6.0 % by weight, or preferably at most 5.0 % by weight, calculated on the total weight of the liquid composition.

In some embodiments, the liquid composition further comprises solid particles e), which are different from components a) to d). Examples of solid particles e) include pigments, fillers, and combinations thereof. The composition may comprise other ingredients and additives commonly used in aqueous compositions, for example organic co-solvents, anti-foaming agents, dispersing aids, and UV stabilizers.

In a preferred embodiment of the invention the rotational viscosity of the liquid composition at 40 °C differs at most 45 % from the rotational viscosity at 4 °C at the same shear rate, wherein the shear rate includes at least one of 0.4 1/s, 82.5 1/s, and 909 1/s. The rheological properties were measured by a MCR 502 rheometer (Anton Paar GmbH; Graz, Austria) and cone-plate geometry (25 mm diameter) in accordance to ISO 3219:1993 standard test method.

The liquid compositions can be applied in various fields, such as coating composition, polymer compositions, cosmetic compositions, wax emulsions, cosmetic compositions, spraying agents, formulations for constructions purpose, metal working fluids, lubricants, liquids for gas and oil production, cleaners, or adhesives.

The liquid compositions which are coating compositions or inks can be used in various application fields, like automotive coatings, construction coatings, protective coatings, marine and bridge coatings, can and coil coatings, wood and furniture coatings, decorative and architectural coatings, floor coatings, industrial coatings, plastics coatings, wire enamels, foods and seeds coatings, leather coatings, both for natural and artificial leather, and color resists, as used for LC displays. Coating materials include pasty materials which typically have a high content of solids and a low content of liquid components, e.g., pigment pastes or effect pigment pastes (using pigments based on aluminum, silver, brass, zinc, copper, bronzes like gold bronze, iron oxide-aluminum); other examples of effect pigments are interference pigments and pearlescent pigments like metal oxide-mica pigments, bismuth oxide chloride or basic lead carbonate.

Polymer or pre-polymer compositions can be aqueous liquid starting materials for the manufacturing of plastic compounds, which are preferably cured by a chemical crosslinking process.

The cosmetic compositions can be all kind of aqueous liquid compositions used for personal care and health care purpose. Examples are lotions, creams, pastes like toothpaste, foams like shaving foam, gels like shaving gel and shower gel, pharmaceutical compounds in gel like delivery form, hair shampoo, liquid soap, fragrance formulations, nail varnish, lipstick, and hair tinting lotions.

Preferred wax emulsions are aqueous dispersions of wax particles formed of waxes which are solid at room temperature.

Spraying agents, preferably used as deposition aids, can be equipped with the inventive polymers in order to achieve drift reduction. They may for example contain fertilizers or herbicides, fungicides, and other pesticides.

The formulations used for construction purpose can be materials which are liquid or pasty during handling and processing; these aqueous materials are used in the construction industry and they become solid after setting time, e.g., hydraulic binders like concrete, cement, mortar/plaster, tile adhesives, and gypsum.

Metal working fluids are aqueous compositions used for the treatment of metal and metal parts. Examples are cutting fluids, drilling fluids, used for metal drilling, mold release agents, mostly aqueous emulsions, e.g., in aluminum die casting and foundry applications, foundry washes, foundry coatings, as well as liquids used for the surface treatment of metals (like surface finishing, surface cleaning and galvanization).

Lubricants are aqueous compositions used for lubricating purpose, i.e., used to reduce abrasion and friction loss or to improve cooling, force transmission, vibration damping, sealing effects, and corrosion protection.

Liquid formulations used for gas and oil production are aqueous formulations used to develop and exploit a deposit. Aqueous drilling fluids or "drilling muds" are preferred examples. An application example is hydraulic fracturing.

Cleaners can be used for cleaning different kinds of objects. They support the removal of contaminations, residual dirt and attached debris. Cleaners also include detergents (especially for cleaning textiles, their precursors and leather), cleansers and polishes, laundry formulations, fabric softeners, and personal care products.

The adhesives can be all kind of aqueous materials which are liquid under processing conditions and which can join joining parts by promoting surface adhesion and internal strength.

The inventive polymer P can be delivered as a solid additive material, e.g., as flakes, pellets, granules. Alternatively, the polymer P can be provided in a liquid form, such as an aqueous or non-aqueous additive composition, preferably as an aqueous additive composition.

The invention further relates to an additive composition comprising
i. 5.0 to 60.0 % by weight of the polymer P according to the invention,
ii. 40.0 to 95.0 % by weight of water,
iii. 0.0 to 1.0 % by weight of a biocide, and
iv. 0.0 to 75.0 % by weight of a viscosity depressant.

The weight percent relate to the sum of components i. to iv. in the additive composition.

In a preferred embodiment, the additive composition comprises
i. 10.0 to 50.0 % by weight of the polymer P according to the invention,
ii. 50.0 to 90.0 % by weight of water,
iii. 0.0 to 0.8 % by weight of a biocide, and
iv. 0.0 to 60.0 % by weight of a viscosity depressant.

The weight percent relate to the sum of components i. to iv. in the additive composition.

Examples of suitable viscosity depressants include polyalkyleneoxides, particularly those based on ethylene oxide, propylene oxides, and mixtures thereof, butyldiglycol, cyclodextrins, and alkyl polyglycosides. Further examples of viscosity depressants are described in US 2007/161745.

The viscosity depressant is an optional component of the additive composition of the invention. If present, the additive composition generally comprises at most 75.0 % by weight of viscosity depressant, preferably at most 60.0 or 55.0 % by weight, calculated on the sum of the components i. to iv. In some embodiments, the amount of viscosity depressant can be below 10.0 % by weight, for example between 2.0 and 4.0 % by weight or between 0.2 and 2.0 % by weight, calculated on the sum of the components i. to iv. In yet another embodiment, no depressant is used at all.

The invention further relates to the use of the polymer P for adjusting the temperature dependence of the viscosity of a composition comprising water and a non-volatile component. In typical embodiments, the use comprises adding the polymer P of the invention to an aqueous composition comprising a non-volatile component. The non-volatile component may be a film-forming component as described above. In other embodiments, the non-volatile component may be a wax or an organic or inorganic hydrophobic particulate material. Typical hydrophobic inorganic materials may be selected from the group of silica, alumina, zirconia, titania, ceria, yttria, tin oxide, calcium carbonate, clays, silicon carbide, silicon nitride, nitrates, acetates, or other salts of aluminum, magnesium, zinc or other metals, or inorganic polymers.

### Examples

### Preparation of the inventive additives

Preparation of starting materials, polymers according to the invention, and comparative polymers

**Table 1: Description of raw materials used**

| Abbreviation | Trade designation | Chemical Description | Source |
|---|---|---|---|
| DesW | Desmodur W | Dicyclohexylmethane-4,4'-diisocyanate | Covestro |
| Hexanol | Hexanol | 1-Hexanol | Millipore Sigma |
| Jeffamine-2 | JEFFAMINE^{®} D-2000 Polyetheramine | Polypropylene glycol) bis(2-aminopropyl ether); Mn = 2,000 g/mol | Huntsman |
| K-KAT | K-KAT 348 | Bismuth carboxylate catalyst | King Industries, Inc. |
| Nacure | NACURE 5074 | Alkyl benzenesulfonic acid catalyst | King Industries, Inc. |
| PEG-6 | Polyglykol 6000 S | Polyethylene Glycol; Mn = 6,200 g/mol | Clariant |
| PEG-8 | CARBOWAX^{™} Polyethylene Glycol (PEG) 8000 | Polyethylene Glycol; Mn = 8,300 g/mol. | The Dow Chemical Company |
| PEG-12 | Polyglykol 12000 S | Polyethylene Glycol; Mn = 13,800 g/mol. | Clariant |
| PEG-20 | Polyglykol 20000 S | Polyethylene Glycol; Mn = 19,500 g/mol | Clariant |
| Phthalic anhydride | Phthalic anhydride | Phthalic anhydride | Millipore Sigma |
| PPG-2 | Polypropylene glycol), average Mn ∼2,000 | Polyproyplene Glycol, Mn = 2,000 g/mol | Millipore Sigma |
| PPG-2.7 | Polypropylene glycol), average Mn ∼2,700 | Polyproyplene Glycol, Mn = 2,700 g/mol | Millipore Sigma |
| PPG-4 | Polypropylene glycol), average Mn ∼4,000 | Polyproyplene Glycol, Mn = 4,000 g/mol | Millipore Sigma |
| PPG-MBE-2 | Polypropylene glycol) monobutyl ether average Mn ∼2,500 | Poly(propylene glycol) monobutyl ether, Mn = 2,500 g/mol | Millipore Sigma |
| TEA | Triethylamine | Triethylamine | Millipore Sigma |
| TMDI | VESTANAT TMDI (trimethylhexamethylene diisocyanate) | Mixture of 2,2,4- and 2,4,4-trimethyl-hexamethylene diisocyanate | Evonik |
| TMMG | Powderlink 1174 | 1,3,4,6-Tetrakis(methoxymethyl)glycoluril | Cytec Industries |
| TMXDI | TMXDI (META) Aliphatic Isocyanate | META-Tetramethylxylylene Diisocyanate | Allnex |

### Other abbreviations used:

Mn: number average molecular weight
PDI: polydispersity index, which is defined as Mw/Mn

### Analytical methods

Hydroxyl titrations are completed with a standardized ethanolic potassium hydroxide titrant (0.2 moles/Liter KOH). Two reagents are used in this process. Reagent A is prepared by dissolving 12.5 g 4-dimethylaminopyradine (DMAP) in tetrahydrofuran (THF) with a final volume of 500 mL in THF in a volumetric flask. Reagent B is prepared from 25 mL acetic anhydride with a final volume of 500 mL in THF in a volumetric flask. Sample preparation begins with adding THF to dissolve the analyte. The quantity of alcoholic hydroxyl groups can be determined by esterification with acetic anhydride (acetylization). This is achieved by adding 10 mL of Reagent A and 5 mL of Reagent B and allowing a 30 minute reaction to occur at room temperature. Any excess acetic anhydride is converted into acetic acid via hydrolysis by reacting 2 mL of deionized water for 10 minutes.

The molecular weights and molecular weight distributions of the inventive and comparative examples were determined using gel permeation chromatography (GPC) according to DIN 55672 part 1 (2016-03). Tetrahydrofuran (THF) was used as the eluent and the temperature of the column system was 40 °C. The calibration was achieved using narrowly distributed linear polyethylene oxide standards (third order regression).

### Preparation of polymers according to the invention

### X.1 Example X.1

A four-necked round-bottom flask equipped with stirrer, temperature probe, and reflux condenser was charged with 0.0236 moles (200.00 g) PEG-8, 0.0473 moles (189.06 g) PPG-4 and toluene. The reaction vessel was heated to 120 °C with nitrogen flowing and constant stirring. The polyalkylene glycols were then dried by azeotropic distillation using a Dean Stark trap. After 90 minutes of drying, the round-bottom flask was cooled to 90 °C. At this point, 0.52 g of K-KAT was added to the round-bottom flask and allowed to incorporate. Five minutes later, 0.0473 moles TMXDI (12.02 g) was added to the vessel. The reaction is exothermic and the isocyanate was added slowly so that the temperature of the flask would not exceed 100 °C. After the complete addition of the isocyanate the mixture was stirred for 90 minutes at 90 °C under nitrogen. The final polymer had a Mn of 10,176 and a PDI of 5.69, as determined by GPC.

The same basic procedure was followed for examples X.2 - X.6 with a 2:1:2 molar ratio of diisocyanate to polyethylene glycol (PEG) to polypropylene glycol (PPG).

**Table 2: List of polyethylene glycol (PEG), polypropylene glycol (PPG), and diisocyanate starting materials and inventive polymers.**

| Example | Diisocyanate type | Diisocyanate (mass) | PEG type | PEG (mass) | PPG type | PPG (mass) | Mn (g/mol) | PDI |
|---|---|---|---|---|---|---|---|---|
| X.2 | TMDI | 25.47 g | PEG-8 | 500.00 g | PPG-MBE-2 | 295.40 g | 11,208 | 5.88 |
| X.3 | TMXDI | 5.30 g | PEG-20 | 200.00 g | PPG-4 | 83.39 g | 9,897 | 9.52 |
| X.4 | TMXDI | 15.85 g | PEG-6 | 200.00 g | PPG-4 | 249.42 g | 8,180 | 6.21 |
| X.5 | TMXDI | 12.71 g | PEG-12 | 300.00 g | PPG-4 | 200.00 g | 8,103 | 6.43 |
| X.6 | TMDI | 5.29 g | PEG-8 | 100.00 g | PPG-4 | 98.10 g | 9,639 | 5.98 |

### X.7 Example X.7

A four-necked round-bottom flask equipped with stirrer, temperature probe, and reflux condenser was charged with 0.0237 moles (200.00 g) PEG-8, 0.0237 moles (94.87 g) PPG-4 and toluene. The reaction vessel was heated to 120 °C with nitrogen flowing and constant stirring. The polyalkylene glycols were then dried by azeotropic distillation using a Dean Stark trap. After 90 minutes of drying, the round-bottom flask was cooled to 90 °C. At this point, 0.40 g of K-KAT was added to the round-bottom flask and allowed to incorporate. Five minutes later, 0.0356 moles TMXDI (9.05 g) was added to the vessel. The reaction is exothermic and the isocyanate was added slowly so that the temperature of the flask would not exceed 100 °C. After the complete addition of the isocyanate the mixture was stirred for 90 minutes at 90 °C under nitrogen. The final polymer had a Mn of 11,580 and a PDI of 7.01, as determined by GPC.

### X.8 Example X.8

A four-necked round-bottom flask equipped with stirrer, temperature probe, and reflux condenser was charged with 0.0236 moles (200.00 g) PEG-8, 0.0473 moles (189.06 g) PPG-4 and toluene. The reaction vessel was heated to 120 °C with nitrogen flowing and constant stirring. The polyalkylene glycols were then dried by azeotropic distillation using a Dean Stark trap. After 90 minutes of drying, the round-bottom flask was cooled to 90 °C. At this point, 0.0407 moles (4.83 g) of hexanol and 0.54 g of K-KAT were added to the round-bottom flask and allowed to incorporate. Five minutes later, 0.0945 moles TMXDI (24.04 g) was added to the vessel. The reaction is exothermic and the isocyanate was added slowly so that the temperature of the flask would not exceed 100 °C. After the complete addition of the isocyanate the mixture was stirred for 90 minutes at 90 °C under nitrogen. The finished product was poured onto a pan to allow the solvent to evaporate. The final polymer had a Mn of 8,363 and a PDI of 3.58, as determined by GPC.

### X.9 Example X.9

### Step 1: Esterification

A four-necked round-bottom flask equipped with stirrer, temperature probe, and reflux condenser was charged with 0.0741 moles (200.00 g) PPG-2.7, 0.03705 moles (5.49 g) Phthalic anhydride, and minimal toluene. The reaction vessel was heated to 160 °C with nitrogen flowing and constant stirring for 3 hours. The toluene was then allowed to dry off and a hydroxyl titration was completed to test the completion of dimerization of PPG. Titration results showed dimerization had been successfully completed.

### Step 2: Urethane formation

A separate four-necked round-bottom flask equipped with stirrer, temperature probe, and reflux condenser was charged with 0.0123 moles (100.00 g) PEG-8, 0.0245 moles (132.43 g) PPG-2.7 dimerized intermediate from Step 1 and toluene. The reaction vessel was heated to 120 °C with nitrogen flowing and constant stirring. The polyalkylene glycols were then dried by azeotropic distillation using a Dean Stark trap. After 90 minutes of drying, the round-bottom flask was cooled to 90 °C. At this point, 0.31 g of K-KAT was added to the round-bottom flask and allowed to incorporate. Five minutes later, 0.0245 moles TMXDI (6.24 g) was added to the vessel. The reaction is exothermic and the isocyanate was added slowly so that the temperature of the flask would not exceed 100 °C. After the complete addition of the isocyanate the mixture was stirred for 90 minutes at 90 °C under nitrogen.

### X.10 Example X.10

A four-necked round-bottom flask equipped with stirrer, temperature probe, and reflux condenser was charged with 0.0246 moles (200.00 g) PEG-8, 0.0493 moles (98.5 g) Jeffamine-2, and toluene. The reaction vessel was heated to 120 °C with nitrogen flowing and constant stirring. The polyalkylene glycols were then dried by azeotropic distillation using a Dean Stark trap. After approximately 90 minutes of drying, the round-bottom flask was cooled to 90 °C. At this point, 0.41 g of K-KAT was added to the round-bottom flask and allowed to incorporate. Five minutes later, 0.0493 moles TMXDI (12.53 g) was added to the vessel. The reaction is exothermic and the isocyanate was added slowly so that the temperature of the flask would not exceed 100 °C. After the complete addition of the isocyanate the mixture was stirred for 90 minutes at 90 °C under nitrogen.

### X.11 Example X.11

A four-necked round-bottom flask equipped with stirrer, temperature probe, and condenser was charged with 0.1201 moles (979.50 g) PEG-8, 0.2402 moles (960.88 g) PPG-4 and 0.4925 moles (987.52 g) TMMG. The reaction vessel was heated to 110 °C under vacuum and constant stirring. The polyalkylene glycols were then dried by removing water vapor via vacuum. After 90 minutes of drying, the contents of the round-bottom flask were poured into a sigma mixer at 110 °C with nitrogen flowing. This was allowed to cool to 90 °C and 11.88 g Nacure was added followed by 0.2306 moles (24.04 g) hexanol and vacuum turned on. Temperature held constant and allowed to mix for 90 minutes under vacuum. At the end of the reaction 16.26 g TEA was added to neutralize the reaction.

### Preparation of comparative polymers

### X.12 Example X.12

A four-necked round-bottom flask equipped with stirrer, temperature probe, and reflux condenser was charged with 0.0245 moles (200.00 g) PEG-8, 0.0490 moles (196.20 g) PEG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.53 g of K-KAT was added to the round-bottom flask and allowed to incorporate. Five minutes later, 0.0490 moles TMXDI (12.47 g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The final polymer had a Mn of 13,056 and a PDI of 2.54, as determined by GPC.

### X.13 Example X.13

A four-necked round-bottom flask equipped with stirrer, temperature probe, and reflux condenser was charged with 0.0123 moles (100.00 g) PEG-8, 0.0245 moles (98.10 g) PEG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.28 g of K-KAT was added to the round-bottom flask and allowed to incorporate. Five minutes later, 0.0245 moles hexanol (2.56 g) was added to the vessel and allowed to incorporate. Five minutes later, 0.0490 moles DesW (13.13 g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The final polymer had a Mn of 11,231 and a PDI of 3.60, as determined by GPC.

### X.14 Example X.14

Polymer X.14 is a conventional associative thickener, commercially available as aqueous solution (22.5 wt.% actives) under the tradename RHEOBYK-T 1010 VF (BYK USA, Inc.). This associative thickener does not contain any units of segment S2.

### X.15 Example X.15

A four-necked round-bottom flask equipped with stirrer, temperature probe, and reflux condenser was charged with 0.0063 moles (56.50 g) PEG-8, 0.0127 moles (50.78 g) PPG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0127 moles (1.30 g) hexanol and 0.15 g of K-KAT were added to the round-bottom flask and allowed to incorporate. Five minutes later, 0.0254 moles TMXDI (6.46g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### X.16 Example X.16

A four-necked round-bottom flask equipped with stirrer, temperature probe, and reflux condenser was charged with 0.0063 moles (56.00 g) PEG-8, 0.0126 moles (50.33 g) PPG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0126 moles (2.34 g) dodecanol and 0.15 g of K-KAT were added to the round-bottom flask and allowed to incorporate. Five minutes later, 0.0252 moles TMXDI (6.40g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### X.17 Example X.17

A four-necked round-bottom flask equipped with stirrer, temperature probe, and reflux condenser was charged with 0.0063 moles (56.50 g) PEG-8, 0.0127 moles (50.78 g) PPG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0127 moles (1.30 g) hexanol and 0.15 g of K-KAT were added to the round-bottom flask and allowed to incorporate. Five minutes later, 0.0254 moles TMDI (5.46g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### X.18 Example X.18

A four-necked round-bottom flask equipped with stirrer, temperature probe, and reflux condenser was charged with 0.0063 moles (56.00 g) PEG-8, 0.0126 moles (50.33 g) PPG-4 and toluene.

The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0126 moles (2.34 g) dodecanol and 0.15 g of K-KAT were added to the round-bottom flask and allowed to incorporate. Five minutes later, 0.0252 moles TMDI (5.41 g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### X.19 Example X.19

A four-necked round-bottom flask equipped with stirrer, temperature probe, and reflux condenser was charged with 0.0063 moles (56.50 g) PEG-8, 0.0127 moles (50.78 g) PPG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0127 moles (2.19 g) 2-undecanol and 0.15 g of K-KAT were added to the round-bottom flask and allowed to incorporate. Five minutes later, 0.0254 moles TMXDI (6.46g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### X.20 Example X.20

A four-necked round-bottom flask equipped with stirrer, temperature probe, and reflux condenser was charged with 0.0063 moles (56.50 g) PEG-8, 0.0127 moles (50.78 g) PPG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0127 moles (2.19 g) 2-undecanol and 0.15 g of K-KAT were added to the round-bottom flask and allowed to incorporate. Five minutes later, 0.0254 moles TMDI (5.46 g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### X.21Example X.21

A four-necked round-bottom flask equipped with stirrer, temperature probe, and reflux condenser was charged with 0.0063 moles (56.50 g) PEG-8, 0.0127 moles (50.78 g) PPG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0127 moles (1.65 g) 2-octanol and 0.15 g of K-KAT were added to the round-bottom flask and allowed to incorporate. Five minutes later, 0.0254 moles TMXDI (6.46g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### X.22 Example X.22

A four-necked round-bottom flask equipped with stirrer, temperature probe, and reflux condenser was charged with 0.0063 moles (56.50 g) PEG-8, 0.0127 moles (50.78 g) PPG-4 and toluene. The reaction vessel was heated to 120° C with nitrogen flowing and constant stirring. The polyalkylene glycols were then dried by azeotropic distillation using a Dean Stark trap. After 90 minutes of drying, the round-bottom flask was cooled to 90° C. At this point, 0.0126 moles (1.65 g) 2-octanol and 0.15 g of K-KAT were added to the round-bottom flask and allowed to incorporate. Five minutes later, 0.0254 moles TMDI (5.46 g) was added to the vessel. The reaction is exothermic and the isocyanate was added slowly so that the temperature of the flask would not exceed 100° C. After the complete addition of the isocyanate the mixture was stirred for 90 minutes at 90° C under nitrogen. The finished product was poured onto a pan to allow the solvent to evaporate. The final product was water insoluble.

### Preparation of an additive composition

The polymers X.1-X.13 were dissolved in the following formulations to form aqueous additive compositions.

| *Component* | *Description* | *concentration [wt.%]* |
|---|---|---|
| Acticide MBS (Biocide) | 1,2-benzisothiazolin-3-one & 2-methyl-4-isothiazolin-3-one, aqueous solution containing 2.5 wt% of each of the two | 0.45 |
| Water | | 89.55 |
| X.1-X.13 | Polymer | 10.00 |

### Application of the inventive additives

### Description of raw materials used

| Component | Function | Technical Description | Source |
|---|---|---|---|
| AC 2025 | Binder | Acrylic Polymer | Alberdingk Boley Greensboro, USA |
| Kronos 2310 | Pigment | Titanium Dioxide | KRONOS Titan GmbH Leverkusen, Germany |
| AQUACER-539 | Wax | Non-ionic emulsion of modified paraffin wax | BYK-Chemie GmbH, Wesel, Germany |
| DISPERBYK-199 | Dispersant | Solution of a copolymer with pigment affinic groups | BYK-Chemie GmbH, Wesel, Germany |
| BYK-1640 | Defoamer | Defoamer formulation made of polyamide particles & highly branched polymers | BYK-Chemie GmbH, Wesel, Germany |
| BYK-1615 | Defoamer | Mixture of foam-destroying polysiloxanes and hydrophobic solids | BYK-Chemie GmbH, Wesel, Germany |
| BYK-349 | Silicone surfactant | Polyether-modified siloxane | BYK-Chemie GmbH, Wesel, Germany |
| RHEOBYK-7420 ES | Rheology Modifier | solution of a modified urea | BYK-Chemie GmbH, Wesel, Germany |
| Acticide MBS | Microbiocide, algicide & fungicide | 1,2-benzisothiazolin-3-one & 2-methyl-4-isothiazolin-3-one, aqueous solution containing 2.5 wt% of each of the two | THOR GmbH, Speyer, Germany |

### Preparation of a paint formulation

A high gloss acrylic emulsion paint was prepared from the following components using a Dispermat CV (VMA Getzmann):

| *Raw Materials* | *wt. %* |
|---|---|
| (1) Grind formulation: | |
| Water | 4.00 |
| Acticide MBS | 0.20 |
| BYK-1640 | 0.20 |
| DISPERBYK-199 | 0.90 |
| Kronos 2310 | 18.75 |
| Water | 0.50 |
| RHEOBYK-7420 ES | 0.25 |
| Water | 3.45 |
| Dispersing with Dispermat CV for 20 minutes at 12 m/s | |
| (2) Letdown formulation: | |
| Alberdingk AC 2025 | 59.00 |
| Propylene Glycol | 3.00 |
| Water | 3.65 |
| Aquacer 539 | 4.00 |
| Aqueous additive composition post add | 1.50 |

The additive compositions are post added under stirring and incorporated for 5 minutes with a Dispermat CV.

### Evaluation of application properties:

The rheological properties of the latex paints containing the additives were measured by a MCR 502 rheometer (Anton Paar GmbH; Graz, Austria) and cone-plate geometry (25 mm diameter) in accordance to ISO 3219:1993 standard test method. The dynamic viscosity units of poise (P) and centipoise (cP) convert to 0.1 and 0.001 Pascal-seconds (Pa·s).

### Application results of the inventive additives

**Table 3: Low-shear rheological properties of additives in latex paint at 4 °C, 23 °C and 40 °C**

| ID | Dose (wt.%) | Viscosity (mPas) @ 0.422 1/s | | |
|---|---|---|---|---|
| | | 4 °C | 23 °C | 40 °C |
| X.1 | 0.5% | 1,104 | 10,566 | 24,698 |
| X.2 | 0.5% | 35,107 | 183,970 | 183,720 |
| X.3 | 0.5% | 1,579 | 3,879 | 7,870 |
| X.4 | 0.5% | 753 | 2,451 | 7,523 |
| X.5 | 0.5% | 827 | 2,520 | 5,827 |
| X.6 | 0.5% | 1,444 | 20,974 | 22,176 |
| X.7 | 0.5% | 57,591 | 212,660 | 244,840 |
| X.8 | 0.5% | 1,666 | 3,005 | 7,739 |
| X.9 | 0.5% | 332 | 943 | 1,331 |
| X.10 | 0.5% | 55,242 | 388,480 | 286,730 |
| X.11 | 0.5% | 278 | 1,033 | 2,755 |
| X.12 | 0.5% | 348 | 661 | 874 |
| X.13 | 0.5% | 134,830 | 33,166 | 21,672 |
| X.14 | 0.5% | 66,075 | 24,499 | 16,744 |

**Table 4: Mid-shear rheological properties of additives in latex paint at 4 °C, 23 °C and 40 °C**

| ID | Dose (wt.%) | Viscosity (mPas) @ 82,5 1/s | | |
|---|---|---|---|---|
| | | 4 °C | 23 °C | 40 °C |
| X.1 | 0.5% | 203 | 884 | 1,119 |
| X.2 | 0.5% | 1,065 | 3,338 | 3,742 |
| X.3 | 0.5% | 227 | 357 | 379 |
| X.4 | 0.5% | 156 | 305 | 396 |
| X.5 | 0.5% | 171 | 263 | 323 |
| X.6 | 0.5% | 299 | 1,453 | 1,578 |
| X.7 | 0.5% | 1,089 | 2,722 | 2,887 |
| X.8 | 0.5% | 333 | 359 | 330 |
| X.9 | 0.5% | 87 | 71 | 66 |
| X.10 | 0.5% | 1,166 | 7,790 | 8,033 |
| X.11 | 0.5% | 81 | 56 | 53 |
| X.12 | 0.5% | 92 | 65 | 58 |
| X.13 | 0.5% | 10,361 | 3,763 | 1,544 |
| X.14 | 0.5% | 6,814 | 2,242 | 1,213 |

**Table 5: High-shear rheological properties of additives in latex paint at 4 °C, 23 °C and 40 °C**

| ID | Dose (wt.%) | Viscosity (mPas) @ 909 1/s | | |
|---|---|---|---|---|
| | | 4 °C | 23 °C | 40 °C |
| X.1 | 0.5% | 97 | 213 | 257 |
| X.2 | 0.5% | 229 | 476 | 569 |
| X.3 | 0.5% | 107 | 126 | 124 |
| X.4 | 0.5% | 78 | 111 | 130 |
| X.5 | 0.5% | 85 | 105 | 115 |
| X.6 | 0.5% | 132 | 310 | 343 |
| X.7 | 0.5% | 244 | 388 | 434 |
| X.8 | 0.5% | 155 | 146 | 128 |
| X.9 | 0.5% | 48 | 36 | 33 |
| X.10 | 0.5% | 249 | 1,005 | 991 |
| X.11 | 0.5% | 46 | 31 | 28 |
| X.12 | 0.5% | 56 | 39 | 34 |
| X.13 | 0.5% | 1,962 | 1,321 | 660 |
| X.14 | 0.5% | 1,856 | 818 | 481 |

The inventive thickeners X.1 - X.11 have been compared to comparative thickeners X.12 - X.13 and commercial thickener X.14 in a waterborne binder system at constant dosage levels for proof of concept. The results are summarized in Tables 3 to 5. The rotational viscosity of these samples was measured at low (0.4 1/s), medium (82.5 1/s) and high (909 1/s) shear rates. These measurements were repeated at low (4 °C), medium (23 °C) and high (40 °C) temperatures. The samples with the inventive thickeners X.1 to X.11 increase in viscosity with increasing temperature at low, medium, high or multiple shear rates (Tables 3 - 5). This contrasts with the comparative thickeners X.12 to X.13 and commercial thickener X.14 that show no significant increase in viscosity with increasing temperature. Instead, these samples decrease in viscosity with increasing temperature at low, medium, high or multiple shear rates. These results indicate that the polymers of the present invention are suitable as thickening agents which counter the viscosity decrease with increasing temperature which traditional formulations exhibit. The comparative thickeners X.15 - X.22 comprise non-polar terminal groups typical of conventional associative thickeners. These comparative thickeners were water insoluble and therefore ill-suited for evaluation in a waterborne binder system.

**Table 6: Low-shear rheological properties of inventive polymers and conventional thickeners combined in latex paint at 4 °C, 23 °C and 40 °C**

| Conventional Thickener | Dose (wt.%) | Inventive Thickener | Dose (wt.%) | Viscosity (mPas) @ 0.422 1/s | | |
|---|---|---|---|---|---|---|
| | | | | 4 °C | 23 °C | 40 °C |
| RHEOBYK-T 1010 VF | 0.5% | | | 66,075 | 24,499 | 16,744 |
| | 0.3% | X.1 | 0.5% | 45,895 | 39,507 | 62,464 |
| | 0.3% | X.6 | 0.5% | 46,756 | 51,171 | 57,254 |

**Table 7: Mid-shear rheological properties of inventive polymers and conventional thickeners combined in latex paint at 4 °C, 23 °C and 40 °C**

| Conventional Thickener | Dose (wt.%) | Inventive Thickener | Dose (wt.%) | Viscosity (mPas) @ 82,5 1/s | | |
|---|---|---|---|---|---|---|
| | | | | 4 °C | 23 °C | 40 °C |
| RHEOBYK-T 1010 VF | 0.5% | | | 6,814 | 2,242 | 1,213 |
| | 0.3% | X.2 | 0.5% | 5,410 | 4,992 | 4,944 |
| | 0.3% | X.6 | 0.5% | 4,724 | 3,209 | 2,920 |
| | 0.3% | X.7 | 0.5% | 5,764 | 4,474 | 4,222 |

**Table 8: High-shear rheological properties of inventive polymers and conventional thickeners combined in latex paint at 4 °C, 23 °C and 40 °C**

| Conventional Thickener | Dose (wt. %) | Inventive Thickener | Dose (wt.%) | Viscosity (mPas) @ 909 1/s | | |
|---|---|---|---|---|---|---|
| | | | | 4 °C | 23 °C | 40 °C |
| RHEOBYK-T 1010 VF | 0.5% | | | 1,856 | 818 | 481 |
| | 0.3% | X.2 | 0.5% | 1,319 | 1,069 | 939 |
| | 0.3% | X.6 | 0.5% | 1,260 | 874 | 747 |
| | 0.3% | X.7 | 0.5% | 1,417 | 1,003 | 806 |
| | 0.3% | X.10 | 0.5% | 1,359 | 1,524 | 1,326 |

The inventive thickeners can be combined with conventional thickeners that show the typical viscosity drop at elevated temperatures. The superposition of both effects limits the temperature dependence of the viscosity. Several inventive polymers were combined with the commercial thickener RHEOBYK-T 1010 VF in a waterborne binder system at constant dosage levels for proof of concept. The rotational viscosity of these samples was measured at low (0.4 1/s), medium (82.5 1/s), high (909 1/s) or multiple shear rates. These measurements were repeated at low (4 °C), medium (23 °C) and high (40 °C) temperatures. The combined effect of the inventive polymers and the conventional thickener differs at most 45 %, from the same rotational viscosity at 4 °C, from at least one of the measured shear rates. This can be inferred from Tables 6 to 8. A person skilled in the art is able to determine the optimum concentrations of inventive polymer and conventional thickener to provide a desired temperature independent rheology profile.

## Claims

1. A polymer P comprising at least one segment S1 and at least one segment S2 covalently linked to each other, wherein
i) at least one segment S1 has a number average molecular weight in the range of 6,000 - 25,000 g/mol and consists of ether repeating units, and for at least 75 % by weight of repeating units of the formula -[CH₂-CH₂-O-]- ,
ii) at least one segment S2 has a number average molecular weight of at most 10,000 g/mol and consists of ether repeating units, and for at most 25 % by weight of repeating units of the formula -[CH₂-CH₂-O-]- ,
iii) polymer P comprises terminal groups comprising at least one of hydroxyl, primary amine or salts thereof, secondary amine or salts thereof, carboxylic acid or salts thereof.

2. The polymer according to claim 1, wherein the segment S2 comprises at least 75 % by weight of repeating units of the formula -[CH(CH₃)-CH₂- O]- .

3. The polymer according to claim 1 or 2, wherein the covalent link between segments S1 and S2 comprises at least one of an amide group, urethane group, urea group, ether group, ester group, polysaccharide group, aminoplast ether group, acetal group, or ketal group.

4. The polymer according to claim 3, wherein the covalent link comprises two urethane groups.

5. The polymer according to any one of the preceding claims, wherein the polymer P comprises from 33 to 80 % by weight of segments S1, calculated on the total weight of the polymer.

6. The polymer according to any one of the preceding claims, wherein the polymer P comprises from 20 to 67 % by weight of segments S2, calculated on the total weight of the polymer.

7. The polymer according to any one of the preceding claims, wherein at least one segment S2 has a number average molecular weight in the range of 2,000 - 10,000 g/mol and consists of ether repeating units, and for at most 25 % by weight of repeating units of the formula -[CH₂-CH₂-O-]- .

8. The polymer according to any one of the preceding claims, wherein the terminal groups do not contain alkyl ether groups.

9. The polymer according to any one of the preceding claims, wherein the polymer P has a number average molecular weight in range of 8,000 - 50,000 g/mol.

10. The polymer according to any one of the preceding claims, wherein the polymer P comprises at least two segments S2.

11. The polymer according to claim 10, wherein one segment S1 is located between two segments S2.

12. A liquid composition comprising
a) water
b) a non-volatile film-forming component, and
c) a polymer P according to any one of the preceding claims 1 to 11.

13. The composition according to claim 12, wherein the composition further comprises a thickener d) which is different from component c).

14. The composition according to claim 12 or 13, wherein component a) is present in an amount of at least 30.0 to 89.9 % by weight, component b) is present in an amount of 5.0 to 40.0 % by weight, component c) is present in an amount of 0.1 to 8.0 % by weight, and component d) is present in an amount of 0.0 to 4.0 % by weight, calculated on the sum of the weight of components a), b), c), and d).

15. The composition according to any one of the preceding claims 12 to 14, wherein the rotational viscosity at 40 °C, differs at most 45 %, from the rotational viscosity at 4 °C at the same shear rate, wherein the shear rate includes at least one of 0.4 1/s, 82.5 1/s, and 909 1/s.

16. Use of the polymer according to anyone of the preceding claims 1 to 11 for adjusting the temperature dependence of the viscosity of a composition comprising water and a non-volatile component.

## Patentansprüche

1. Polymer P, umfassend mindestens ein Segment S1 und mindestens ein Segment S2, die kovalent miteinander verknüpft sind, wobei
i) mindestens ein Segment S1 ein zahlenmittleres Molekulargewicht im Bereich von 6000-25.000 g/mol aufweist und aus Ether-Wiederholungseinheiten und zu mindestens 75 Gew.-% aus Wiederholungseinheiten der Formel -[CH₂-CH₂-O-]- besteht,
ii) mindestens ein Segment S2 ein zahlenmittleres Molekulargewicht von höchstens 10.000 g/mol aufweist und aus Ether-Wiederholungseinheiten und zu höchstens 25 Gew.-% aus Wiederholungseinheiten der Formel -[CH₂-CH₂-O-]-besteht,
iii) Polymer P Endgruppen umfasst, die mindestens eines von Hydroxyl, primärem Amin oder Salzen davon, sekundärem Amin oder Salzen davon, Carbonsäure oder Salzen davon umfassen.

2. Polymer nach Anspruch 1, wobei das Segment S2 mindestens 75 Gew.-% Wiederholungseinheiten der Formel -[CH(CH₃)-CH₂-O-]-umfasst.

3. Polymer nach Anspruch 1 oder 2, wobei die kovalente Verknüpfung zwischen den Segmenten S1 und S2 mindestens eines von einer Amidgruppe, Urethangruppe, Harnstoffgruppe, Ethergruppe, Estergruppe, Polysaccharidgruppe, Aminoplastethergruppe, Acetalgruppe oder Ketalgruppe umfasst.

4. Polymer nach Anspruch 3, wobei die kovalente Verknüpfung zwei Urethangruppen umfasst.

5. Polymer nach einem der vorhergehenden Ansprüche, wobei das Polymer P 33 bis 80 Gew.-% Segmente S1, berechnet auf das Gesamtgewicht des Polymers, umfasst.

6. Polymer nach einem der vorhergehenden Ansprüche, wobei das Polymer P 20 bis 67 Gew.-% Segmente S2, berechnet auf das Gesamtgewicht des Polymers, umfasst.

7. Polymer nach einem der vorhergehenden Ansprüche, wobei mindestens ein Segment S2 ein zahlenmittleres Molekulargewicht im Bereich von 2000-10.000 g/mol aufweist und aus Ether-Wiederholungseinheiten und zu höchstens 25 Gew.-% aus Wiederholungseinheiten der Formel -[CH₂-CH₂-O-]- besteht.

8. Polymer nach einem der vorhergehenden Ansprüche, wobei die Endgruppen keine Alkylethergruppen enthalten.

9. Polymer nach einem der vorhergehenden Ansprüche, wobei das Polymer P ein zahlenmittleres Molekulargewicht im Bereich von 8000-50.000 g/mol aufweist.

10. Polymer nach einem der vorhergehenden Ansprüche, wobei das Polymer P mindestens zwei Segmente S2 umfasst.

11. Polymer nach Anspruch 10, wobei sich ein Segment S1 zwischen zwei Segmenten S2 befindet.

12. Flüssige Zusammensetzung, umfassend
a) Wasser,
b) eine nichtflüchtige filmbildende Komponente und
c) ein Polymer P nach einem der vorhergehenden Ansprüche 1 bis 11.

13. Zusammensetzung nach Anspruch 12, wobei die Zusammensetzung ferner einen Verdicker d), der von Komponente c) verschieden ist, umfasst.

14. Zusammensetzung nach Anspruch 12 oder 13, wobei Komponente a) in einer Menge von mindestens 30,0 bis 89,9 Gew.-% vorliegt, Komponente b) in einer Menge von 5,0 bis 40,0 Gew.-% vorliegt, Komponente c) in einer Menge von 0,1 bis 8,0 Gew.-% vorliegt und Komponente b) in einer Menge von 0,0 bis 4,0 Gew.-% vorliegt, berechnet auf die Summe des Gewichts der Komponenten a), b), c) und d).

15. Zusammensetzung nach einem der vorhergehenden Ansprüche 12 bis 14, wobei sich die Rotationsviskosität bei 40 °C um höchstens 45 % von der Rotationsviskosität bei 4 °C bei der gleichen Scherrate unterscheidet, wobei die Scherrate mindestens eines von 0,4 1/s, 82,5 1/s und 909 1/s einschließt.

16. Verwendung des Polymers nach einem der vorhergehenden Ansprüche 1 bis 11 zur Einstellung der Temperaturabhängigkeit der Viskosität einer Zusammensetzung, die Wasser und eine nichtflüchtige Komponente umfasst.

## Revendications

1. Polymère P comprenant au moins un segment S1 et au moins un segment S2 liés de façon covalente l'un à l'autre, dans lequel
i) au moins un segment S1 a un poids moléculaire moyen en nombre dans la plage de 6 000 à 25 000 g/mol et est constitué de motifs de répétition d'éther, et pour au moins 75 % en poids de motifs de répétition de formule - [CH₂-CH₂-O-]-,
ii) au moins un segment S2 a un poids moléculaire moyen en nombre d'au plus 10 000 g/mol et est constitué de motifs de répétition d'éther, et pour au plus 25 % en poids de motifs de répétition de formule -[CH₂-CH₂-O-]-,
iii) le polymère P comprend des groupes terminaux comprenant au moins l'un parmi un hydroxyle, une amine primaire ou des sels de celle-ci, une amine secondaire ou des sels de celle-ci, un acide carboxylique ou des sels de celui-ci.

2. Polymère selon la revendication 1, dans lequel le segment S2 comprend au moins 75 % en poids de motifs de répétition de formule - [CH(CH₃)-CH₂-O]-.

3. Polymère selon la revendication 1 ou 2, dans lequel la liaison covalente entre les segments S1 et S2 comprend au moins l'un parmi un groupe amide, un groupe uréthane, un groupe urée, un groupe éther, un groupe ester, un groupe polysaccharide, un groupe éther d'aminoplaste, un groupe acétal ou un groupe cétal.

4. Polymère selon la revendication 3, dans lequel la liaison covalente comprend deux groupes uréthane.

5. Polymère selon l'une quelconque des revendications précédentes, dans lequel le polymère P comprend de 33 à 80 % en poids de segments S1, calculés sur la base du poids total du polymère.

6. Polymère selon l'une quelconque des revendications précédentes, dans lequel le polymère P comprend de 20 à 67 % en poids de segments S2, calculés sur la base du poids total du polymère.

7. Polymère selon l'une quelconque des revendications précédentes, dans lequel au moins un segment S2 a un poids moléculaire moyen en nombre dans la plage de 2 000 à 10 000 g/mol et est constitué de motifs de répétition d'éther, et pour au plus 25 % en poids de motifs de répétition de formule -[CH₂-CH₂-O-]-.

8. Polymère selon l'une quelconque des revendications précédentes, dans lequel les groupes terminaux ne contiennent pas de groupes éther d'alkyle.

9. Polymère selon l'une quelconque des revendications précédentes, dans lequel le polymère P a un poids moléculaire moyen en nombre dans la plage de 8 000 à 50 000 g/mol.

10. Polymère selon l'une quelconque des revendications précédentes, dans lequel le polymère P comprend au moins deux segments S2.

11. Polymère selon la revendication 10, dans lequel un segment S1 est situé entre deux segments S2.

12. Composition liquide comprenant
a) de l'eau
b) un composant filmogène non volatil, et
c) un polymère P selon l'une quelconque des revendications précédentes 1 à 11.

13. Composition selon la revendication 12, la composition comprenant en outre un épaississant d) qui est différent du composant c).

14. Composition selon la revendication 12 ou 13, dans laquelle le composant a) est présent en une quantité d'au moins 30,0 à 89,9 % en poids, le composant b) est présent en une quantité de 5,0 à 40,0 % en poids, le composant c) est présent en une quantité de 0,1 à 8,0 % en poids, et le composant d) est présent en une quantité de 0,0 à 4,0 % en poids, calculées sur la base de la somme du poids des composants a), b), c) et d).

15. Composition selon l'une quelconque des revendications précédentes 12 à 14, dans laquelle la viscosité rotationnelle à 40 °C, diffère au plus de 45 %, par rapport à la viscosité rotationnelle à 4 °C au même taux de cisaillement, le taux de cisaillement comprenant au moins l'un parmi 0,4 1/s, 82,5 1/s, et 909 1/s.

16. Utilisation du polymère selon l'une quelconque des revendications précédentes 1 à 11 pour ajuster la dépendance vis-à-vis de la température de la viscosité d'une composition comprenant de l'eau et un composant non volatil.
